# EUROPEAN PATENT APPLICATION

(11) **EP 1 798 497 A2**
(43) Date of publication of application: **20.06.2007**
(21) Application number: 06398020.5
(22) Date of filing: 13.12.2006
(51) Int. Cl.: F24J 2/24

(54) **Low- pressure and low- temperature collection system of solar thermal energy**

(30) Priority: 14.12.2005 PT 10340005
(71) Applicant: De Andrea Lencastre Godinho, Luis Henrique, 3840-385 Vagos (PT)
(72) Inventor: De Andrea Lencastre Godinho, Luis Henrique, 3840-385 Vagos (PT)
(74) Representative: Pereira da Cruz, Joao

(57) **Abstract**

The present invention comprises a solar thermal energy collection system to heat water which is made up basically of an assembly of solar panels, build from plates or hollow-cell structured sheets of fixed width and variable lenght, and a system to store the energy comprising two twin containers, one for the actual heat storage (which can just contain pure water) and another to hold the liquid that flows inside the collectors. The solar collector in these panels is transparent being the solar heat absorbed directly by the liquid that runs in them, which is opaque to the radiation. The container that holds this liquid is at atmospheric pressure and the liquid that is pumped into the panels gets back into the container just by gravity. Whenever there is not enough solar radiation, or in case of malfunction, the pump stops and the absorber liquid drains back into the tank. The collectors will then be empty and translucent which, on one hand, avoids freezing caused by low external temperatures and, on the other hand, prevents that they overheat under excessive radiation. The low-pressure and low-temperature working characteristic of this system allows it to be built essentially from polymeric materials with their well known advantages, such as simpler production and assembly methods, better insulation, less weight, lower costs, etc.

This invention also discloses another novel characteristic which refers to the fact that the same panel, built from three hollow-cell structured plates, can be used as an element that is, simultaneously, absorber, radiant and dissipater, that is, by circulating appropriate liquids it can absorb heat in its central plate, can radiate (or absorb) heat on its back plate and can also dissipate heat from its frontal plate.

## Description

### Summary

The present invention relates to a solar thermal energy collection system as defined in claim 1.

### Background

The prior patent art contains many various different types of solar thermal collection systems with black absorptive collectors are well known in the art where the heat is transferred by conduction to a fluid that flows in them which then carries it to the consumption or storage points. However, only a few systems are based on the reverse principle of the transparent collector where a "black liquid" circulates which, more than a simple carrier element, also works as the absorption element of the radiating energy striking the collector. Among them, we point out the ones described on the following patents:

Patent US 3107052 relates to a transparent system to collect and to dissipate thermal radiation that can be used in the construction of windows for observing sources of intense thermal radiation, such as open hearth furnaces; the system basically consists on a dual pane window in which a transparent heat absorbing fluid is circulated and is then cooled in an external circuit passing through heat storage or dissipation devices.

Patent US 3939819 refers to a panel to collect solar thermal energy where a back insulated box with a transparent cover holds a planar coil (several arrangements are displayed) made from transparent tube inside which flows an absorbent dispersion of colloidal graphite in water, usually called "black liquid".

Patent US 4134389 relates to a solar panel to capture thermal energy, which is made out from transparent plates, eventually containing a back insulation layer with a reflective surface; the absorber liquid flows inside the gaps formed by the irregularities of two juxtaposed plates or in grooves directly machined on a blocklike plastic material; these panels can either operate in active or passive mode, that is, either the absorber liquid circulates and the panel becomes opaque to radiation or the circuit is turned off which empties the panel, turning it thus transparent or reflective.

Also Patents US 4158355, US 4170984 and US 4227514 refer thermal solar panels of a very similar type: box with a transparent cover sheet, collector system with a transparent front to be used with a "black liquid", and an insulating bottom; they only difer on the layout and shape of the channels wherein the absorber fluid flows, and in the type of flow and properties of these fluids, aiming to optimize the efficiency of the said panels.

The present invention, unlike the solutions disclosed on the previous mentioned patents, refers to a complete system to absorb, transport and store thermal solar energy, being its main objective to allow a dramatic reduction in production costs and to make the installation easier by using polymeric materials, without compromising the efficiency and the durability, in excess of ten years, that has to be guaranteed to these systems.

The heat is generated when solar radiation exists but, in general, it will only be used in periods of lower radiation or even when there is no radiation at all. Therefore, it is evident that the storage of the energy for later use is as important as its collection.

For that reason, the panel, the carrier system and the storage of the energy, being interconnected and interdependent, can not be seen separately because pressure and temperature levels in the system depend on the characteristics of the assembly and not just on one particular component only.

Pressure and temperature are the main factors that restrict the use of polymeric materials in systems for collection and storage of solar thermal energy. Pressure induces stresses in the plastic making its polymeric chains tend to slide over each other, leading to irreversible strain and, finally, to failure. This phenomenon is called creep and it is strongly dependent on time and temperature.

Temperature increases molecular motion, weakening the bonds that keep polymeric chains attached to each other, easing their relative and irreversible sliding (creep), and speeding up also the oxidizing processes that destroy the chain itself and lead to polymer degradation, especially under ultra-violet radiation. On the other hand, possible chemical bonds crosslinking the chains can be broken by excessive stress and temperature.

The combination of the high temperatures that are normally attained in traditional solar collectors when the system stops under intense radiation, which is usually termed stagnation temperature, and the city water supply pressure, which can sometimes be in excess of 5Kg/cm2, are away too much for cheaper commodity plastics, strongly compromising the service life of the parts that use them.

The present invention allows to built a system that works at low pressure and, even in case of malfunction, it protects itself by emptying the panel, preventing thus the temperature to rise up to levels where it can speed up the degradation of its components.

This invention also possesses another novel characteristic related to the fact that the same panel, build from three hollow-cell structured plates, can be used as simple construction element (eg. replacing building walls), with high insulation properties, and serving three different purposes:
First, it can work as a traditional solar thermal panel when the absorber fluid runs through its middle plate, collects the energy, carries it to the storage container and transfers this energy to the liquid that is held there for later use;
Second, the liquid that stores the energy in the storage container can be pumped through the channels of the external back plate; the panel radiates heat from its rear, heating thus the room;
In the third, suitable for areas having wide thermal amplitude between the night and day periods, a liquid is pumped through the channels of the external front plate when the outer temperature is low, cooling the contents of a low temperature storage tank, being this liquid later pumped through the channels of the external back plate, cooling the room when outside temperature gets higher.

It is also being considered an enviromentally friend design for this system, thinking of its future disassembly and on the reuse (recycling) of its materials.

### Brief description of drawings

The description that follows is based on the annexed drawings, which are not intended to be restrictive. In these drawings:
Figure **1** shows a schematic diagram ilustrating an embodiment of the assembly that constitutes the system of the present invention;
Figure **2** is a transverse cross sectional view of the solar panel **7** considered in the system of the present invention.

### Detailed description of invention

As it can be seen from the annexed figures, the thermal solar energy collection and storage system is made out from several distinct elements that constitute and support independent circuits having specific purposes.

The central component of this system is made out of one container **1** coated with an insulating layer **2,** kind or mineral wool or other material, polymeric or not, with low thermal conductivity, this container being divided in two separate tanks **3** and **4,** that store two different liquids: the bigger container **3,** holds water or any other suitable fluid and serves to store and delivery the thermal energy to where and when it is needed; the smaller container **4** holds the absorber fluid, which can be a dispersion of colloidal grafitte in water, liquid that will flow in the collector **7,** absorbing the solar energy striking on it and, while passing through the heat exchanger **8** on its way back to the container **4,** transfer the heat to the storage fluid in the container **3.**

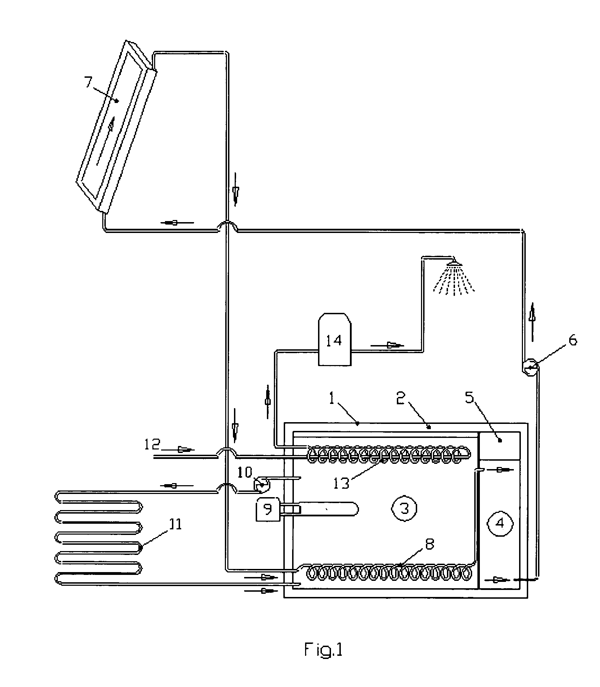

The placement of the container for the absorber fluid **4** underneath the storage container **3,** instead of the side by side arrangement shown in Figure **1,** will be thermodynamically advantageous aldo it may eventually present a higher level of difficulty on its practical execution and, consequently, a higher cost.

Basically, this system has three main circuits and their working principles will be better understood by an individual explanation on each one of these circuits:
The solar thermal energy collection circuit consists of a container **4** for the absorber fluid, which is at atmosferic pressure, with an headspace **5** filled with air in its upper level; this fluid is opaque to solar radiation and is pumped to the upper level of the solar collectors **7** though the electric pump **6** which can either be fed by the electric mains supply or with energy supplied by photovoltaic cells; the fluid then travels inside the panels **7** heating up during its way up by absorption of the solar radiation and, under gravity, goes back into the container **4** not before going through the heat exchanger **8** where it transfers the heat collected in the panels to the fluid held in the container **3.** When the circulation pump **6** stops, whichever the reason, the fluid that is inside the panels **7** at that moment automatically drains back to the container **4,** being then the panels filled with the air that was held in the headspace **5** of the container.

The circulation pump **6** only starts when the sensor located inside the panel signals that enough solar radiation to heat up the absorber liquid exists and the sensor installed at the bottom of the storage container **3** shows that the temperature there is low enough to accept the heat to be collected at the panels.

On the other hand, the circulation pump **6** stops whenever: a) energy fails or pump malfunction or; b) the temperature of the absorber fluid when exiting the panels **7** is above a pre-set value which is thought to damage and/or to compromise the durability of the components in this circuit or; c) lacks solar radiation and the heat collected at the panels **7** and carried by the fluid will not significantly increase the heat already held in the storage container **3.** In any of these situations, the panels **7** will empty, becoming transparent, reason why there is no danger for them neither to freeze nor to overheat.

Then we have the storage and distribution circuit for the heat which central element, the storage container **3,** can also be at atmosferic pressure; the fluid held in this container receives, at the heat exchanger **8,** the heat absorbed and carried in the collecting circuit or, eventually and whenever necessary, the heat generated by the back up system **9** powered by electricity, gas, or any other suitable and adequate energy source.

The storage fluid held in container **3,** eventually just pure water, can be used to deliver the heat that it stores through circuits with circulation pumps **10** and space heaters **11** for low temperature room heating, such as floor heating systems or large radiating panels.

Naturally, this solar heat accumulator will be designed and dimensioned according the energy locally needed to fulfill a certain average consumption, as the solar thermal energy collection circuit, that is, the total area of solar panels **7,** will have to be ballanced with the accumulator connected to it.

Finally, we have the tap hot water circuit, also known as domestic hot water (DHW), which is pressurized at the local water mains supply pressure; the water comes directly from the mains supply **12** and goes through the heat exchanger **13** inside the storage fluid held in the container **3,** where it is pre-heated before passing through the back-up system **14** and follow to the poins of consumption.

This tap hot water circuit is independent from any of the other two circuits, reason why the water running in it, usually drink water, is in no danger of being contaminated by whatever storage or absorber fluid being used in the system.

Nothing prevents that, either by practical or economical reasons, the two back-up systems **9** e **14** be joined in one device only.

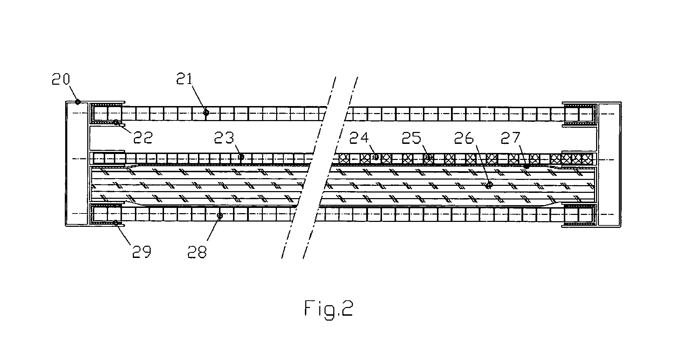

Figure **2** illustrates a transverse cross sectional view of a possible embodiment for the solar panels considered in the collection circuit of this system. This panel has a frame **20** that can be built from one or more standard profiles made from aluminum, plastic, or any other suitable material.

This frame profile holds the rim of three rigid sheets made from polymeric material. The outer cover sheet **21** is necessarily transparent and can be multiwall structured with hollow-cells arranged longitudinally as represented in the figure. For better sealing, the rim of this sheet can be fitted with a flexible profile **22** with a suitable shape.

The mid plate **23** is transparent and makes up the solar collector itself; this is a structured plate with hollow tubes aligned longitudinally and can be made from parallel tubing or manufactured by extrusion of a polymeric transparent material, such as polycarbonate; attached to both ends of this sheet by snap fit we have the manifolds; the absorber fluid enters by the lower manifold, runs up the sheet channels and gets out through the upper manifold draining back to the container by gravity.

The absorber fluid can either run up all channels of the collector sheet **23,** turning it opaque, or just by alternate channels which can be done by closing the ends of the channels that are supposed to remain empty **25** or yet just by using an array of pipes placed side by side; this solution, in addition to making the sheet semi-opaque, increases the absorption efficiency because the channels where the fluid circulates **24** will get radiation not only on their front surface but also on both of their sides; spiral cords can be placed inside the channels where the absorber fluid flows **24** in order to slow down the flow and to promote some turbulence and uniformity on its exposure and temperature; these cords can be produced by extrusion of a material eventually transparent and similar to the one from which the absorption plate is made off.

The insulating characteristics of the panel increase when the absorber fluid stops flowing and is replaced by air inside the channels of the collector.

The rear sheet **28,** which can be also multiwall structured to improve its stifness and insulating properties, as well as for weight reduction, holds an insulating layer **26** with the purpose of decreasing thermal losses from the panel to the exterior; this insulating layer has a reflective surface **27** to improve the absorbing efficiency of the collector and to reflect the radiation whenever it it empty, avoiding thus the high stagnation temperatures of conventional collectors. The reflective surface **27** of the insulating layer gets fully visible when the absorber fluid stops running and it can have various and different colours, including images, which represents an aesthetic advantage for the panel.

This colour variation can also be attained by using coloured absorber fluids, including semi-transparent or even transparent to visible radiation.

Not using the insulating layer **26,** together with a transparent rear sheet **28,** allows the panel to be translucent, transparent to radiation when the absorber liquid stops running and the panel becomes empty. In order to increase the transparency of the panel, both the cover sheet **21** and the rear sheet **28** can be solid instead of being multiwall structured.

Both the cover sheet **21** and the rear sheet **28** can be fitted in a frame **20** with a sealant profile, **22** and **29,** with a suitable cross-section, manufactured from a radiation resistant elastomeric material, such as EPDM.

This panel, used as a simple construction component replacing the whole or just part of a building wall, can also act as a radiant element, heating up the interior of a compartment just by making the heat storage liquid **3** flow through the channels of its structured back plate **28,** creating thus a space heating circuit **11** as part of the actual panel.

The same panel, in areas where high thermal amplitude exist, can also act as a heat dissipater element by running a liquid through its front plate **21** during the night, cooling the contents of an auxilliary container, and running this liquid through the back plate **28** during the day, absorbing heat, cooling thus the interior of the compartment.

The cover plate **21,** the collector **23,** the insulating layer **26** and the back plate **28** can be manufactured with standard width and cut only on its length to the right dimension required for the panel. This manufacturing procedure allows low cost panels to be build from standard components, with excelent insulation characteristics and already proved durability, allowing these panels, further to their purpose of collecting themal solar energy, to replace with advantage traditional roof components and external coating elements used in building construction.

## Claims

1. Thermal solar energy collection system to heat fluids, comprising:
a) collection circuit for thermal solar energy using a low pressure system where an absorber fluid flows through parallel transparent tubing or through the length channels of a transparent multiwall structured sheet;
b) storage and distribution circuit for the collected thermal energy, running also at low pressure;
c) tap hot water circuit pressurized at the local water mains supply pressure,
wherein:
- the said collection circuit working at low pressure - the absorber fluid is pumped to the upper part of the collectors trough the absorption plate and, from there, drains back to the container - and at low temperature once the sole "black element" and the hottest in the system is the fluid that carries the heat out of the panel; when the circuit stops, due to malfunction, lack of radiation or excess of heat, the collector drains out becoming transparent and/or reflecting the incident radiation;
- the said collection circuit, working at low pressure and low temperature, allowing that, with controlled safety and extended life time, regular polymeric materials to be used in its manufacture;
- the said collection circuit having collectors located inside panels made from standard components, such as sheets, profiles, etc., of low cost, easy assembly, excelent insulating properties and proved durability under solar radiation;
- the said storage and distribution circuit of thermal energy being able to work also at low pressure which lowers the production costs of the containers and minimizes fluid leaks in the heat distribution circuits;
- the said tap hot water circuit for domestic use, working under mains water supply pressure through a heat exchanger that pre-heats the incoming tap water using the heat stored in the storage circuit, not being thus possible any contamination because no contact exists between the tap water and the collecting (absorber) and the storage/distribution fluids.

2. Thermal solar energy collection system, according to claim 1, which allows modular and integrated systems of collectors/storage low pressure and low temperature units to be produced, where the heat storage capacity of container 3, which is determined from the local energy consumption profile, is balanced with the area of solar panels to be installed and this, consequently, sets the volume of the absorber fluid container 4.

3. Thermal solar energy collection system, according to claim 1, having low cost panels that, beyond their purpose of collecting solar energy, can be used in construction for their highly efficient insulation, replacing roof tiles and external layers on building walls.

4. Thermal solar energy collection system, according to claims 1 and 3, with panels that turn translucent when the absorber fluid stops running and they become empty, allowing, by using a reflective foil 27 behind the collector with different colours or even images, to have an aesthetic effect and promotional advantage.

5. Thermal solar energy collection system, according to claims 1, 3 and 4, using an absorber fluid circulating inside a transparent collector, where the said fluid can have colours other than black, or even, being opaque to infrared radiation, to be transparent to the visible radiation.

6. Thermal solar energy collection system, according to claims 1 and 5, wherein its panels, without the inner insulating layer, are translucent allowing solar radiation to pass through them when said radiation is scanty or, by running the absorber fluid inside the collectors 7, to increase their opacity, insulating thus the interior of the building from excess heat while this surplus of thermal energy is stored for later consumption/distribution.

7. Thermal solar energy collection system, according to claim 1, wherein the absorber fluid may run up all length channels of the collector plate 23, making it opaque, or up separated pipes or through alternate plate channels which is can be achieved by closing the ends of all channels 25 that must remain empty, solution that, in addition to turning the sheet semi-opaque, increases the absorption efficiency because the channels 24 where the fluid flows will get radiation not only on their front surface but also on both of their sides

8. Thermal solar energy collection system, according to claims 1 and 7, wherein the fluid flow can be slowed and some turbulence can be promoted, as well as uniformity on the exposure and temperature of the said fluid, by placing inside the channels 24 wherein the absorber fluid flows spiral cords obtained by extrusion of a material that can be transparent, similar to the material of collector plate 23.

9. Thermal solar energy collection system, according to claim 1, having panel collectors that, further to their simple purpose of absorbing solar energy, may also work as space heaters just by circulating the liquid held in the storage container 3 through their back plates, heating thus the interior of the building;

10. Thermal solar energy collection system, according to claims 1 and 9, having panel collectors that, further to their simple purpose of absorbing solar energy, may also work as heat dissipaters in areas having wide thermal amplitude, by circulating a liquid held in an auxilliary container through the channels on their front plates 21, dissipating heat and cooling it during the cooller night periods, and later running that liquid through the channels of their back plates 28, absorbing heat and cooling thus the interior of the building during the hotter day periods.
